# EUROPEAN PATENT APPLICATION

(11) **EP 4 765 528 A1**
(43) Date of publication of application: **24.06.2026**
(21) Application number: 24383390.2
(22) Date of filing: 17.12.2024
(51) Int. Cl.: H02G 1/10, F03D 80/80, H02G 15/007, H02G 3/32, H02G 9/12

(54) **ROTARY CLAMP DEVICE**

(71) Applicant: Fundación Tecnalia Research & Innovation, 20009 San Sebastián, Guipúzcoa (ES); Universidad del País Vasco / Euskal Herriko Unibertsitatea, 48940 Leioa, Bizkaia (ES)
(72) Inventor: RICO RUBIO, Antonio, 20009 San Sebastián - Guipúzcoa (ES); SALCEDO FERNÁNDEZ, Fernando, 20009 San Sebastián - Guipúzcoa (ES); LÓPEZ MENDIA, Joseba, 20009 San Sebastián - Guipúzcoa (ES); LLORENTE GONZÁLEZ, José Ignacio, 48940 Leioa (Bizkaia) (ES)
(74) Representative: Balder IP Law, S.L.

(57) **Abstract**

A clamp device for clamping a cable (1000) comprising an inner armour comprising a plurality of inner armour wires (1001) and an outer armour comprising a plurality of outer armour wires (1002). The clamp device (1) comprises an upper clamp assembly (11) for clamping the inner armour wires (1001), and a lower clamp assembly (12) for clamping the outer armour wires (1002). The upper clamp assembly (11) is arranged so that it is capable of rotation in relation to the lower clamp assembly (12).

## Description

### TECHNICAL FIELD

The present invention relates to a clamp device for securing an end portion of a cable to, for example, an off-shore installation, such as an off-shore wind power platform. The invention also relates to an installation including the clamp device, and to a method of clamping a cable using the clamp device.

### STATE OF THE ART

It is known in the art to connect installations and equipment, such as electrical power producing installations, hydraulic equipment, and equipment for data transmission, to other installations or equipment, for example, to a grid, using cables, including flexible cables. A problem faced in, for example, off-shore energy production installations, such as off-shore wind power installations, is that at least part of the cable will extend through water and may have to allow for relative movement between the installation to which the cable is connected, for example, an off-shore wind turbine platform, and the surroundings. Also, a certain flexibility of the cable may be necessary to facilitate deployment of the cable between the off-shore installation and a position distant from the off-shore installation, for example, on-shore.

To allow for the necessary flexibility while preventing undesired twisting of the cable and while making the cable sufficiently resistant to damage, it is known to provide cables with armours surrounding the interior of the cable, where the conductors, such as for example electrical conductors or conductors for hydraulic fluid, are placed. One kind of cable known in the art comprises an outer armour and an inner armour, each of which comprises a plurality of helically extending armour wires, that is, the armour wires extend helically along the cable, and the electrical conductors are placed within the armours. The outer armour and the inner armour are basically co-axial, and the helical winding of the wires of one of the armours is clock-wise, whereas the helical winding of the wires of the other armour is counter-clockwise. That is, the helical winding of the wires of the outer armour and the helical winding of the wires of the inner armour are in opposite directions or, with other words, the wires of the outer armour and the wires of the inner armour are of opposite lay. Cables like this are sometimes referred to as dynamic cables, different from static cables which often feature only one layer of armour wires.

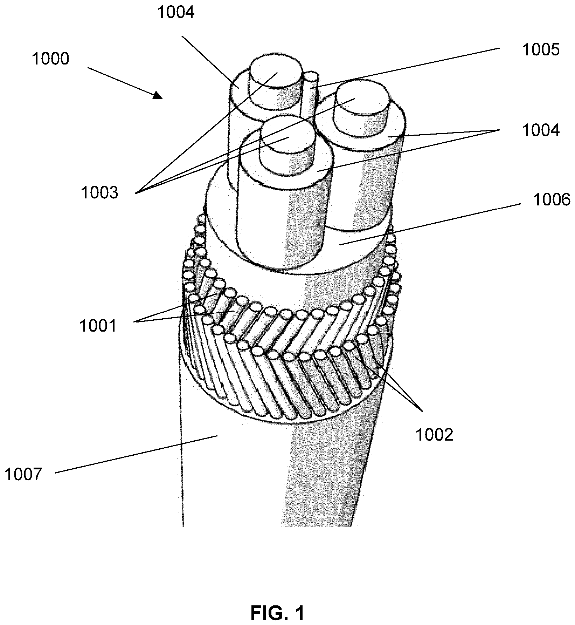

An example of a dynamic cable is shown in figure 1. Figure 1 schematically illustrates an end portion of a dynamic cable 1000, comprising an inner armour made up of helically wound inner armour wires 1001, and an outer armor made up of helically wound outer armour wires 1002. As discussed above, the inner armour wires and the outer armour wires are of opposite lay. Additionally, the illustrated dynamic cable comprises three electrical conductors 1003 (for example, of cupper (Cu) or aluminium (Al)), each surrounded by one or more screening and insulation layers 1004. The cable 1000 may additionally include a set of optical fibers 1005, for communication purposes. These components, that is, the electrical conductors 1003 and their insulation/screening layers 1004, and the set of optical fibers 1005, are typically embedded in some kind of filler material 1006, such as plastic filler material, which, in the illustrated example, is surrounded by the inner armour (made up of the inner armour wires 1001) and the outer armour (made up of the outer armour wires 1002). In the illustrated example, the outer armour is surrounded by an external sheath 1007. Other dynamic cables may include additional layers, or additional items, for example, additional components within the armours, including tapes, fillers, etc.

The armour wires are typically metallic, such as of steel, or comprise a coated metal core, such as a steel core. The purpose of the opposite lay is to prevent excessive torsion of the cable, in particular when the cable is subjected to tensional forces.

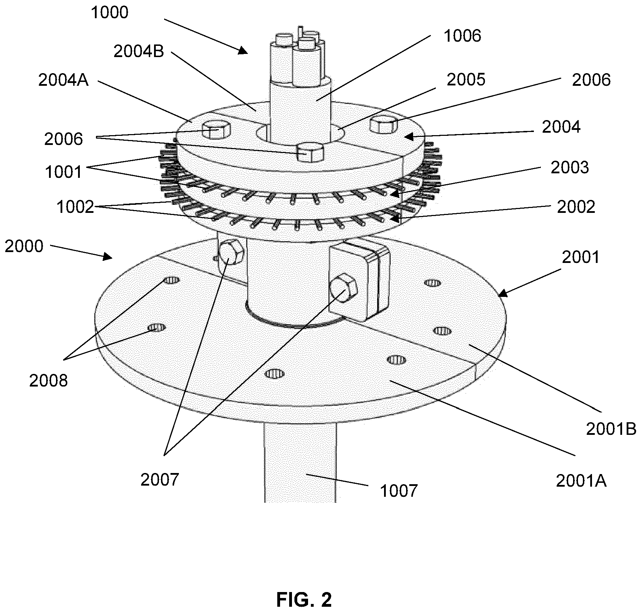

Typically, a dynamic cable deployed to an off-shore installation, such as a floating wind turbine platform, has to be reliably attached to the platform. This is typically done by clamping an end portion of the dynamic cable to the platform. This can be done by peeling off the outer sheath 1007 and thereafter clamping the wires of the outer and/or inner armour using a suitable clamp device. Figure 2 schematically illustrates an example of how this can be carried out, using a clamp device 2000 that is believed to be in line with what may be known in the art. This device comprises a base member 2001 intend to be attached to an off-shore installation (such as an off-shore wind turbine platform), and a clamp arrangement comprising a lower clamp member 2002 (forming part of the base member 2001), an intermediate clamp member 2003, and an upper clamp member 2004. As schematically illustrated, the base member 2001, including the lower clamp member 2002, and the other clamp members 2003, 2004, are each made up of two substantially identical parts that when brought together define an internal opening, so that a central channel 2005 is formed that extends throughout the clamp device 2000. For example, as schematically illustrated in figure 2, the upper clamp member 2004 is made up of two parts 2004A and 2004B, which together surround the uppermost part of the central channel 2005. Similarly, the base member 2001 is made up of two parts 2001A and 2001B, etc. Thus, the clamp device 2000 can be assembled around the incoming end of the cable 1000, with the cable 1000 accommodated in the central channel 2005. The wires 1002 of the outer armour and the wires 1001 of the inner armour are bent outwards, basically, in the illustrated example, bent outwards 90 degrees with regard to the axis of the cable. Thus, the wires 1002 of the outer armour are basically bent to extend over the upper surface of the lower clamp member 2002, then the intermediate clamp member 2003 is placed on top of the wires 2002, then the wires 1001 of the inner armour are bent over the upper surface of the intermediate clamp member 2003, whereafter the upper clamp member 2004 is placed on top of the wires 1001 of the inner armour. Then, typically using some kind of threaded elements 2006 such as threaded bolts, rods and/or nuts, the clamp members 2002, 2003 and 2004 are clamped together, exerting sufficient pressure on the wires 1001, 1002 trapped between them so as to safely retain the cable 1000 in the clamp device. On the other hand, the two parts 2001A, 2001B of the base member 2001 are attached together by bolts 2007 or similar. Thus, all the elements described above are interconnected and thus form the clamp device which can be attached to the off-shore installation, for example, using through holes 2008 in a lower flange of the base member 2001 to attach the base member 2001 to the installation using bolts or similar.

Instead of the kind of flat clamp members shown in figure 2, one could use conically or frusto-conically shaped clamp members, whereby the wires could be bent by less than 90 degrees, such as by 45 degrees.

### DESCRIPTION OF THE INVENTION

Now, using this kind of clamp device, it is readily understood from figure 2 that the outer armor and the inner armor, made up of the armour wires 1002 and 1001, respectively, will be securely clamped and blocked against rotation. That is, torque or stresses applied to the cable below the clamp device will not result in any rotation of the outer armour or the inner armour at the level of the clamping of the outer armor wires 1002 and the inner armour wires 1001. That is, the outer armour will not be capable of rotating with regard to the inner armour, and vice-versa.

It has been found that this may be sub-optimal. An explanation therefor may be the presence of certain differences in the responses of the inner armour and the outer armour to torque when the cable is_subjected to normal tension. The underlying reason for the presence of two armours with opposite lay (instead of using only one armour of helical threads, all of the same lay, as in some "static cables") is, at least in part, a desire to prevent a tension applied to the cable from inducing a substantial torque to the cable, caused by the tendency of a helix to unwind when subjected to tension, that could result in substantial rotation of the cable around its axis. Now, the number of wires in the outer armour may be different from the number of wires in the inner armour, and/or the dimensions of the wires in the outer and inner armours may be different, and the radius of the outer armour is larger than the radius of the inner armour, and the pitch of the wires 1002 of the outer armour may be different from the pitch of the wires 1001 of the inner armour, etc. This may create certain imbalances within the cable, resulting in stresses when normal forces are exerted on the cable. It is believed that such stresses may end up causing damage to the cable, for example, to the armour wires, where the armour wires are clamped to the clamp device. It is believed that these stresses can be reduced if the inner armour can be allowed to rotate, at least to a certain extent, with regard to the outer armour, at the level of the clamp device.

A first aspect of the invention relates to a clamp device for clamping a cable comprising an inner armour comprising a plurality of inner armour wires and an outer armour comprising a plurality of outer armour wires. The clamp device comprises an upper clamp assembly for clamping the inner armour wires, and a lower clamp assembly for clamping the outer armour wires. The upper clamp assembly is arranged so that it is capable of rotation in relation to the lower clamp assembly. The term "rotation" refers to a relative rotation between the two clamp assemblies, in the sense that their relative angular orientation may vary, that is, so that one can be displaced angularly in relation to the other.

That is, the term "rotation" is to be interpreted broadly, that is, not in the sense that one of the clamp assemblies has to be capable of moving angularly by 360 degrees or more with regard to the other. Rather, the term is to be interpreted in the sense that the two clamp assemblies are to be capable of carrying out a relative angular movement, that is, so that one can turn in relation to the other, around a common axis. The rotation is typically around an axis substantially defined by the axis of a cable extending through the clamp assemblies.

Thus, due to this capacity of rotation, the inner armour will be capable of rotation in relation to the outer armour at the level of the clamp device. This is understood to contribute to a reduction of stresses and/or to a reduction of risk of damage to the armour wires, when the cable is subjected to stresses, such as to torque-inducing tensions, when the cable is clamped by the clamp device.

In some embodiments, the upper clamp assembly is arranged so that it is capable of rotation by at least 5 degrees in relation to the lower clamp assembly, and/or the upper clamp assembly is arranged so that it is not capable of rotation by more than 90 degrees in relation to the lower clamp assembly. Preferably, the capacity of rotation implies a capacity of rotation by at least 5 degrees, preferably at least 10 degrees, such as at least 15 degrees. However, in many embodiments, the capacity of rotation is limited, so that, for example, the upper claim assembly is not capable of rotating by more than 90 degrees in relation to the lower clamp assembly, such as not capable of rotating by more than 60, 45, 30 or 20 degrees in relation to the lower clamp assembly.

In some embodiments, the clamp device further comprises a slide element arranged between the upper clamp assembly and the lower clamp assembly, to facilitate rotation of the upper clamp assembly in relation to the lower clamp assembly. The term "slide element" is to be interpreted as any element that serves to facilitate rotation. Typically, it is an element, such as a disc-shaped element, of a material, or coated by a material, having a relatively low friction coefficient. For example, the slide element may be a plate or disc of a low friction coefficient material, or coated by a low friction material, such as graphite-like carbon materials or coatings, engineering polymers such as fluoropolymers (e.g. PTFE), polyamides (e.g. Nylon), acetals, poly-ethylenes (e.g. HDPE/UHMWPE) and polyether ether ketones (e.g. PEEK).

In some embodiments, one of the upper clamp assembly and the lower clamp assembly comprises at least one projecting part, and the other one of the upper clamp assembly and the lower clamp assembly comprises a recess. The projecting part is arranged to fit into the recess so as to slide in the recess when the upper clamp assembly rotates in relation to the lower clamp assembly. Thus, the recess can serve to guide the projecting part during the relative rotation between the upper clamp assembly and the lower clamp assembly, and the angular extension of the recess can serve to delimit the capacity of rotation of the upper clamp assembly in relation to the lower clamp assembly, for example, to limit the capacity of rotation to for example less than 90, 60, 45, 30 or 15 degrees, just to mention some examples. The recess may be formed as a through hole axially extending all throughout one of the clamp members of the clamp assembly (see our discussion below regarding the constitution of the clamp assemblies) in question, or just be shaped as a non-throughgoing groove therein. It may preferably be shaped as a curved recess or groove, extending at a fixed radial distance from the center axis of the clamp assembly.

In some embodiments, the slide element comprises at least one through hole for accommodating said, at least one, projecting part. The through hole in the slide element may, in some embodiments, be shaped similarly to the recess, that is, have the same kind of extension in the angular direction. However, it may also have another shape, for example, it may simply be a circular through hole.

In some embodiments, the upper clamp assembly comprises an upper clamp member and a lower clamp member, and means for biasing (that is, forcing, pressing...) the upper clamp member and the lower clamp member towards each other so as to exert pressure on the inner armour wires when these are placed between the upper clamp member and the lower clamp member. Thus, thereby, the inner armour wires can become clamped by the upper clamp assembly. In some embodiments, the means for biasing the upper clamp member and the lower clamp member towards each other comprise a plurality of threaded members, for example, threaded rods or shafts attached to one of the clamp members, such as to the lower clamp member, and intended to pass through holes in the other clamp member and to interact with corresponding nuts. In other embodiments, the threaded members may comprise bolts traversing one of the clamp members and interacting with respective threaded bores in the other clamp member, or bolts traversing both the upper and the lower clamp member and interacting with nuts, or any other suitable means for forcing the clamp members towards each other. In other embodiments, non-threaded biasing means may be used. Optionally:
the plurality of threaded members comprise a plurality of threaded shafts extending upwards from the lower clamp member and, optionally, forming an integral part thereof or being fixed thereto, for example, by welding or similar,
the upper clamp member comprises a plurality of through holes for receiving the threaded members, and
the clamp device further comprises internally threaded elements, for example, nuts, adapted to be screwed onto the threaded members above the upper clamp member.

In some embodiments, the lower clamp assembly comprises an upper clamp member and a lower clamp member, and means for biasing (that is, forcing, pressing...) the upper clamp member and the lower clamp member towards each other so as to exert pressure on the outer armour wires when these are placed between the upper clamp member and the lower clamp member. The means for biasing may be as those described in relation to the upper clamp assembly.

In some embodiments, the clamp device further comprises a base member, the base member being arranged for attachment of the clamp device to an installation, such as to an offshore installation, such as to an offshore platform, such as to an offshore wind-turbine platform. For this purpose, the base member may comprise a bottom portion provided with through holes for attachment of the bottom portion to the installation by means of, for example, bolts. In some embodiments, the base member comprises a first part and a second part, adapted be assembled facing each other forming, between them, a channel portion with a periphery delimited by the first part and the second part, the channel portion forming part of a channel, extending through the clamp device, for accommodating the cable. Thus, rather than inserting the cable to be clamped through the base member, for example, up through a central opening in the base member, the cable can be drawn to its position, for example, up to its position within the installation, whereafter the base member can be assembled around the cable, by bringing the two parts together. The two parts may include interconnection means, such as orifices for bolts or otherwise, allowing them to be fixed together, for example, in such a way as to exert pressure onto the cable, or not. In some embodiments the base members may be hinged to each other on one side, and include interlocking means, such as one or more through holes for one or more threaded bolts, or other interlocking means such as some kind of ratchet mechanism, to allow the base member to be locked around the cable, optionally applying pressure onto the cable, as an alternative to having the cable pushed through an opening in the base member. Also the other elements of the clamp device referred to above, such as the upper clamp members, the lower clamp members, and/or the sliding plate, may be embodied in two parts, to allow for them to be assembled around the cable, rather than having to insert the cable through these elements.

In some embodiments, the base member comprises an upper part forming part of the lower clamp assembly. In particular, the upper part of the base member may form the lower clamp member of the lower clamp assembly. Thereby, the number of parts of the clamp device can be minimized or at least kept rather low, and/or the clamp device can be made compact.

In some embodiments, the lower clamp assembly is arranged so that it is capable of rotation in relation to the base member. This allows for additional freedom of movement of the cable and its armours within the clamp device, and may further serve to reduce the risk of rupture of armour wires, for example, when the cable is subjected to forces, for example, outside the clamp device, such as outside the installation. The clamp device preferably comprises a slide element arranged between the lower clamp assembly and the base member. The term "slide element" is to be interpreted as any element that serves to facilitate rotation. Typically, it is an element of a material, or coated by a material, having a relatively low friction coefficient. For example, the slide element may be a plate or disc of a low friction coefficient material, or coated by a low friction material, such as graphite-like carbon materials or coatings, engineering polymers such as fluoropolymers (e.g. PTFE), polyamides (e.g. Nylon), acetals, poly-ethylenes (e.g. HDPE/UHMWPE) and polyether ether ketones (e.g. PEEK).

In some embodiments, the means for biasing (that is, forcing, pressing...) the upper clamp member of the lower clamp assembly and the lower clamp member of the lower clamp assembly towards each other comprise a plurality of threaded elements arranged to be threaded into respective threaded bores in the upper clamp member of the lower clamp assembly from below, traversing the lower clamp member of the lower clamp assembly, the threaded elements each having a head portion arranged to exert pressure onto the lower clamp member of the lower clamp assembly. The base preferably comprises an upper flange comprising through holes, the through holes having a diameter that is sufficient to allow the head portion of a respective threaded element to pass through the through hole so that the threaded elements can be screwed into the lower clamp assembly through these through holes, from below, so that the heads of the threaded elements will engage with the lower clamp members but not interfering with the base member during rotation of the lower clamp assembly in relation to the base member. Also the slide elements, when present between the lower clamp assembly and the base member, can comprise such through holes, allowing the heads of the threaded elements to pass through them.

Another aspect of the invention relates to an installation comprising an offshore platform and equipment for energy production, such as one or more wind turbines. The installation further comprising a clamp device as described above, the clamp device clamping a cable, such as a dynamic cable, for transfer of energy produced by the equipment to a destination remote from the installation.

Another aspect of the invention relates to a method of clamping a cable using a clamp device as described above, the cable comprising inner armour wires and outer armour wires. The method comprises the steps of clamping outer armour wires with the lower clamp assembly, and clamping inner armour wires with the upper clamp assembly.

### BRIEF DESCRIPTION OF THE DRAWINGS

To complete the description and in order to provide for a better understanding of the invention, a set of drawings is provided. Said drawings form an integral part of the description and illustrate embodiments of the invention, which should not be interpreted as restricting the scope of the invention, but just as examples of how the invention can be carried out. The drawings comprise the following figures:
Figure 1 schematically illustrates the structure of a dynamic cable.
Figure 2 schematically illustrates how an end of this kind of dynamic cable can be clamped, using a clamp device, according to principles known in the art.
Figure 3 is an exploded perspective view of a clamp device according to an embodiment of the invention.
Figure 4 is a perspective view of the clamp device according to the embodiment of figure 3, in an assembled state, clamping an incoming cable.
Figure 5 is an exploded perspective view of a clamp device according to another embodiment of the invention.
Figure 6 is an exploded perspective view from another angle of part of the clamp device according to the embodiment of figure 5.
Figure 7 is a schematic perspective view of an installation including a clamp device according to an embodiment of the invention.

### DESCRIPTION OF WAYS OF CARRYING OUT THE INVENTION

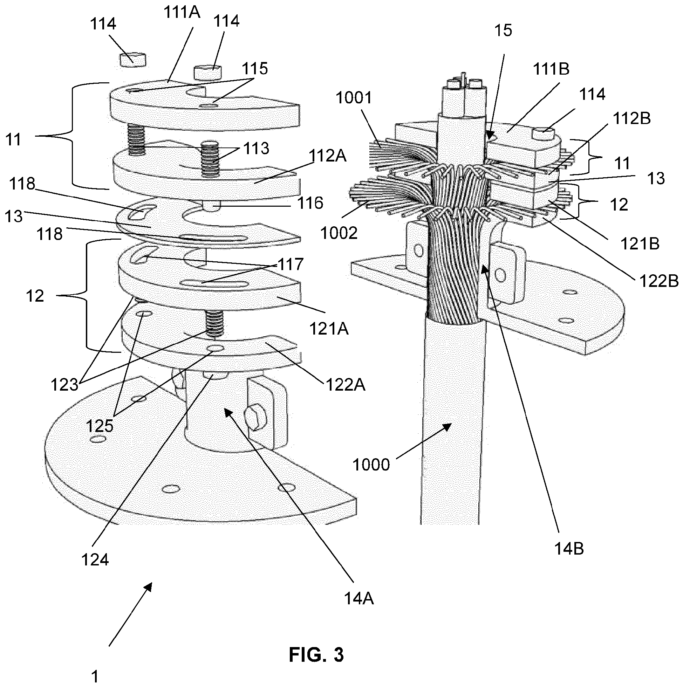

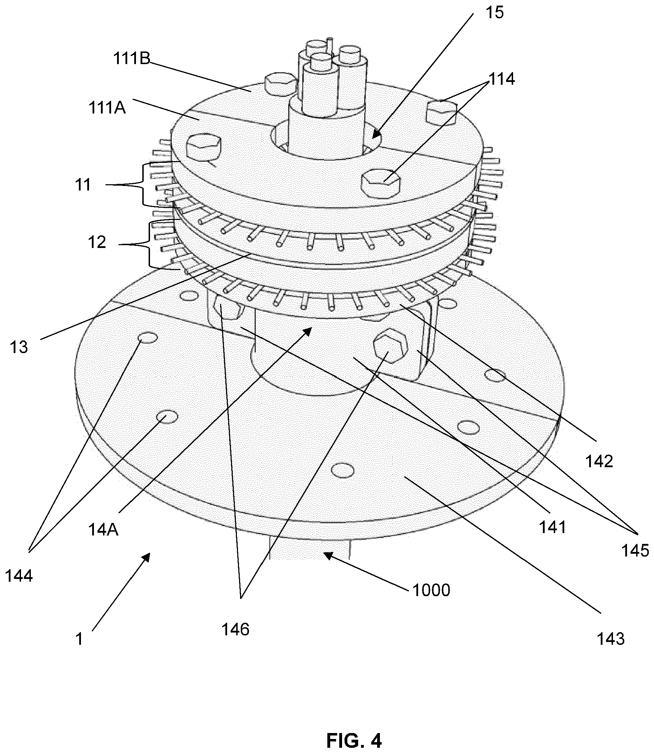

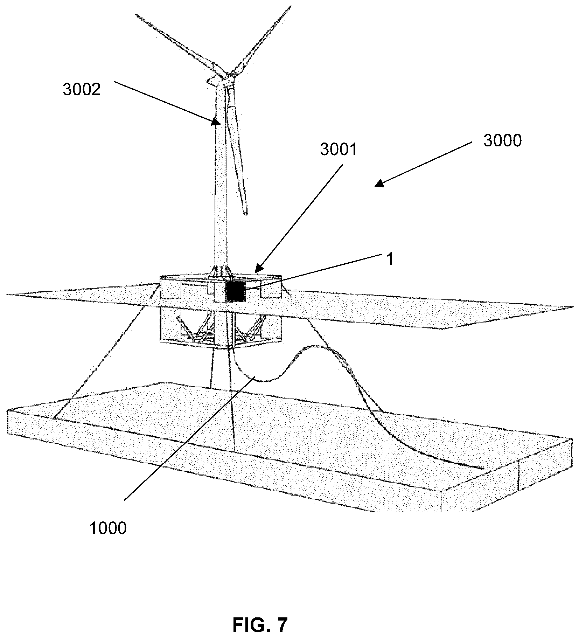

Figures 3 and 4 illustrate a clamp device 1 according to an embodiment of the invention, comprising an upper clamp assembly 11 for clamping inner armour wires 1001 of a cable 1000 (for example, of a cable as shown in figure 1), a lower clamp assembly 12 for clamping outer armour wires 1002 of the cable, and a base member 14A, 14B, comprising a first part 14A and a second part 14B, which are intended to be assembled around the cable, for example, once the cable has been hoisted to its final position within an installation, such as a platform 3001 (see figure 7) supporting, for example, a wind turbine 3002 (see figure 7). Basically, the two parts are mirror images of each other, and each part defines part of the perimeter of a central opening of the base member, which corresponds to part of a central channel 15 of the clamp device 1, intended to accommodate the cable. As shown in figure 4, the base member, when its two parts 14A and 14B are brought together, comprises a central portion 141 separating a bottom portion 143 (with larger diameter than the central portion 141) and un upper portion 142 (also with larger diameter than the central portion 141). The central portion 141 includes lateral extensions 145 with through holes (not visible in figure 4) allowing the two parts 14A and 14B to be firmly locked together using bolts 146 and nuts, or any other kind of suitable locking means.

In the illustrated embodiment, the upper portion 142 of the base member 14A, 14B forms part of the lower clamp assembly 12, as will be described more in detail below, with reference in particular to figure 3. The lower portion 143 of the base member 14A, 14B comprises a plurality of through holes 144 for allowing the base member to be bolted to an installation, for example, to a floor or other part of a platform. In some embodiments, the base member and, in particular, the inner part thereof defining the central opening, is dimensioned so that the base member, when the two parts 14A and 14B thereof are locked together, exerts a certain pressure on the cable, thereby contributing to the clamping of the cable. In other embodiments, the base member is not designed or chosen to exert pressure on the cable. For example, in some embodiment, the clamping function of the clamp device is only or mainly performed by the upper and lower clamp assemblies (described below) and their interaction with the armour wires. This kind of arrangement can often be preferred, for example, to ensure that all forces exerted on the cable are transferred to the armour wires, at least to a very substantial extent.

The clamp device 1 additionally comprises a disc-shaped slide element 13 of a low friction coefficient material such as graphite-like carbon materials or coatings, engineering polymers such as fluoropolymers (e.g. PTFE), polyamides (e.g. Nylon), acetals, poly-ethylenes (e.g. HDPE/UHMWPE) and polyether ether ketones (e.g. PEEK), arranged between the upper clamp assembly 11 and the lower clamp assembly 12, so as to facilitate rotation of the upper clamp assembly 11 in relation to the lower clamp assembly 12.

The upper clamp assembly 11 comprises an upper clamp member 111A, 111B and a lower clamp member 112A, 112B, each of these clamp members being made up of two diametrically opposed parts (111A and 111B, and 112A and 112B, respectively), which (just like what has been explained above regarding the base member) together define a central opening for the passage of the cable. Also, the lower clamp assembly 12 comprises an upper clamp member 121A, 121B and a lower clamp member 122A, 122B, each one of which is made up of two parts (121A and 121B, and 122A and 1122B, respectively), likewise defining between them an opening forming part of the channel 15 for accommodating the cable in the center of the clamp device 1.

As schematically illustrated in figure 3, in what regards the upper clamp assembly 11, the lower clamp member 112A, 112B is provided with vertically extending threaded rods 113 (two of which are shown in figure 3) intended to penetrate through respective through holes 115 in the upper clamp member 111A, 111B, so as to interact with respective nuts 114 by means of which the upper clamp member 111A, 111B can be pressed against the lower clamp member 112A, 112B so as to firmly clamp the inner armour wires 1001 of the cable 1000.

In the case of the lower clamp assembly 12, it is the upper clamp member 121A, 121B that is provided with vertically extending threaded rods 123, which are intended to penetrate through respective through holes 125 in the bottom clamp member 122A, 122B, which, as explained above, is formed by the upper portion 142 of the base member 14A, 14B (see figure 4). Thus, these vertically extending rods 123 can interact with nuts 124 (one of which is shown in figure 3) arranged under the bottom clamp member 122A, 122B, by means of which the lower clamp member 122A, 122B can be pressed against the upper clamp member 121A, 121B so as to firmly clamp the outer armour wires 1002 of the cable.

The lower clamp member 112A, 112B of the upper clamp assembly 11 comprises a plurality of downwardly extending projections 116 (one of which is shown in figure 3) arranged to engage in respective arcuately shaped recesses or grooves 117 in the upper clamp member 121A, 121B of the lower clamp assembly 12, via through holes 118 in the disc-shaped slide element 13. In this embodiment, also the through holes 118 in the slide element have an acuate shape, but in other embodiments they may be, for example, purely circular.

When, due to forces exerted on the cable, the inner armour wires 1001 tend to be angularly displaced in relation to the outer armour wires 1002, the upper clamp assembly 11 can rotate around the vertical axis of the clamp assembly, that is, around the cable 1000, with the projections 116 sliding in the recesses or grooves 117. As readily understood, the length of the recesses or grooves 117 in the circumferential direction determines the maximum extent of the relative rotation between the upper clamp assembly 11 and the lower clamp assembly 12. It has been found that a capacity of rotation in the order of, for example, 10, 15 or 20 degrees may be enough to substantially reduce the risk of overloading and rupture of armour wires, for example, due to torque exerted on the inner and outer armours due to tensional forces exerted on the cable, or due to other forces.

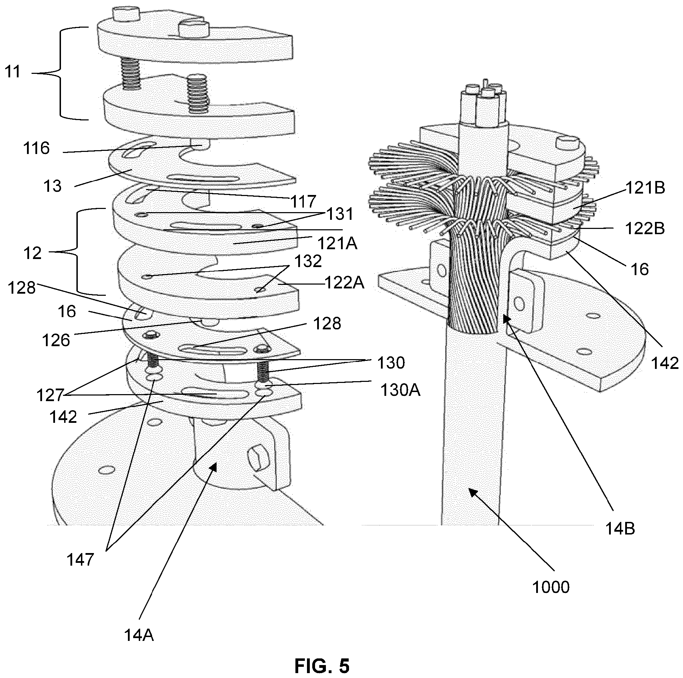

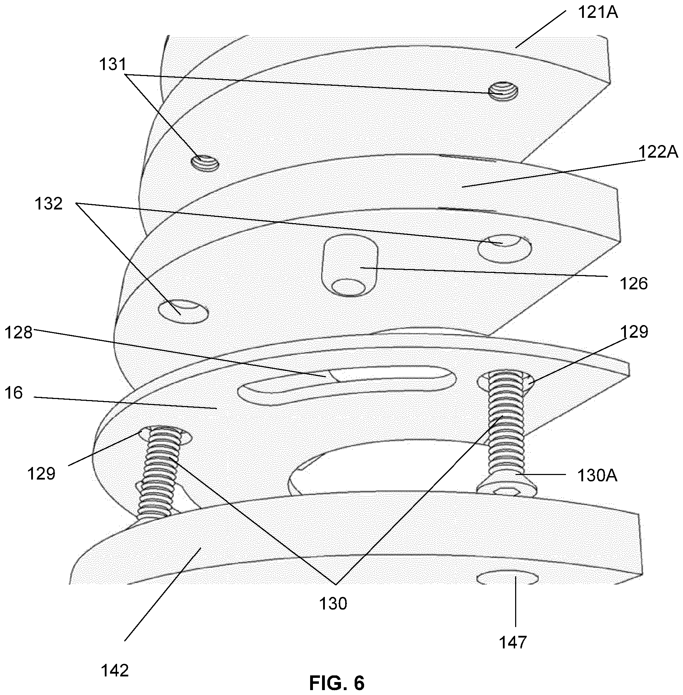

Another embodiment is schematically illustrated in figures 5 and 6. Many of the parts of this embodiment may be similar or identical to those of the embodiment of figures 3 and 4; these identical or similar parts have the same reference numbers in figure 5, and are thus not described more in detail herein. For example, the upper clamp assembly of this embodiment may be identical to the upper clamp assembly of the embodiment of figures 3 and 4, including the way in which its projections 116 interact with respective recesses 117 in the upper clamp member 121A, 121B of the lower clamp assembly 12.

However, differently from what is the case with the embodiment of figures 3 and 4, in the embodiment of figure 5 the lower clamp assembly 12 is capable of rotation in relation to the base member 14A, 14B. Thus, the lower clamp member 122A, 122B of the lower clamp assembly is not part of the base member 14A, 14B, but is separated from an upper portion 142, in the form of a laterally extending flange, of the base member 14A, 14B. A disc-shaped slide element 16, which may be similar or identical in nature to the slide element 13 positioned between the upper clamp assembly 11 and the lower clamp assembly 12, is positioned between the lower clamp assembly 12 and the upper portion 142 of the base member, to facilitate rotation of the lower clamp assembly 12 in relation to the base member 14A, 14B.

Similarly to what has been explained above with regards to the projections 116 and grooves/recesses 117 for the limited rotatability between the upper clamp assembly 11 and the lower clamp assembly 12, in the embodiment of figures 5 and 6, the lower clamp member 122A, 122B of the lower clamp assembly 12 is provided with projections 126 (one of which is shown in figure 5) arranged to enter into and interact with respective recesses or grooves 127 in the upper portion 142 of the base member 14A, 14B, whereby the projections 126 pass through corresponding through holes 128 in the slide member 16.

To exert the pressure needed to clamp the outer armour wires 1002 with the lower clamp assembly 12, screw elements 130 are provided to be threaded into threaded bores 131 in the upper clamp members 121A, 121B of the lower clamp assembly 12, via respective through holes 147 in the upper portion 142 of the base member, via corresponding through holes 129 (see figure 6) in the slide element 16, and via corresponding through holes 132 in the lower clamp member 122A, 122B of the lower clamp assembly 12. The through holes 147 in the upper portion 142 of the base member, and the through holes 129 (see figure 6) in the slide member 16, have large enough diameters to allow the head 130A of the respective screw element 130 to pass through the respective through hole, so that the head 130A can enter into, for example, a frusto-conically shaped seat in the bottom part of the respective through hole 132 in the lower clamp member 122A, 122B, so as to press the lower clamp member 122A, 122B against the upper clamp member 121A, 121B, to exert the necessary clamp pressure onto the outer armour wires 1002. The screw elements 130 may, for example, be Allen type screw elements. In figure 6, part of the clamp assembly including the upper portion 142 of the base member, the slide element 16, part 122A of the lower clamp member and part 121A of the upper clamp member of the lower clamp assembly 12, are schematically illustrated, to facilitate understanding of how the screw elements 130 can be screwed into the respective threaded bores 131 of the upper clamp member 121A, whereby the heads 130A of the screw elements pass through the through holes 147 in the upper portion 142 of the base member and through the through holes 129 in the slide element 16, to exert pressure onto the seats in the through holes 132 in the lower clamp member of the lower clamp assembly.

Figure 7 schematically illustrates an installation 3000, namely, an offshore platform 3001 with equipment 3002 for energy production in the form of a wind turbine. A dynamic cable 1000 is provided to transfer the energy produced by the wind turbine to a destination (not shown) remote from the installation 3000. The dynamic cable 1000, which can be a cable as per figure 1, arrives at the platform and rises to a position close to the upper surface of the platform, where the cable is fixed by a schematically illustrated clamp device 1, for example, in accordance with one of the embodiments described above. The capacity of rotation described above can help to reduce the risk of damage to the cable at the point of clamping, for example, the risk of damage to the armour wires used to clamp the cable, for example, when the cable is subjected to tensions that may induce a certain amount of rotation of the outer armour versus the inner armour.

In this text, expressions such as "upper" and "lower" when used in relation to the clamp device refer to a situation in which the clamp device is arranged to surround a vertically arranged cable portion, with a particular orientation of the clamp device, such as with a base oriented downwards. That is, the terms "upper" and "lower" are not intended to imply that the clamp device must be used with this orientation. For example, the clamp device may be used oriented horizontally, or "upside down", with the base above the clamp assemblies, so that the upper clamp assembly becomes placed below the lower clamp assembly, etc. That is, the terms "upper" and "lower" are basically used to facilitate understanding of the relative positions of the different parts and components referred to.

In this text, the terms "outer" and "inner", when referring to the armours and the arnour wires, refer to the spatial relationship between the two armours, in the sense that the inner armour is radially within the outer armour, and vice-versa.

In this text, the term "comprises" and its derivations (such as "comprising", etc.) should not be understood in an excluding sense, that is, these terms should not be interpreted as excluding the possibility that what is described and defined may include further elements, steps, etc.

The invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. A clamp device for clamping a cable (1000) comprising an inner armour comprising a plurality of inner armour wires (1001) and an outer armour comprising a plurality of outer armour wires (1002), the clamp device (1) comprising:
an upper clamp assembly (11) for clamping the inner armour wires (1001);
a lower clamp assembly (12) for clamping the outer armour wires (1002);
**characterized in that**
the upper clamp assembly (11) is arranged so that it is capable of rotation in relation to the lower clamp assembly (12).

2. The clamp device according to claim 1, wherein the upper clamp assembly (11) is arranged so that it is capable of rotation by at least 5 degrees in relation to the lower clamp assembly (12), and/or wherein the upper clamp assembly (11) is arranged so that it is not capable of rotation by more than 90 degrees in relation to the lower clamp assembly (12).

3. The clamp device according to any one of the preceding claims, further comprising a slide element (13) arranged between the upper clamp assembly (11) and the lower clamp assembly (12), to facilitate rotation of the upper clamp assembly (11) in relation to the lower clamp assembly (12).

4. The clamp device according to any one of the preceding claims, wherein one (11) of the upper clamp assembly (11) and the lower clamp assembly (12) comprises at least one projecting part (116), and wherein the other one (12) of the upper clamp assembly (11) and the lower clamp assembly (12) comprises a recess (117), wherein the projecting part (116) is arranged to fit into the recess (117) so as to slide in the recess (117) when the upper clamp assembly (11) rotates in relation to the lower clamp assembly (12).

5. The clamp device according to claim 4 when depending from claim 3, wherein the slide element comprises at least one through hole (118) for accommodating said, at least one, projecting part (116).

6. The clamp device according to any one of the preceding claims, wherein the upper clamp assembly (11) comprises an upper clamp member (111A, 111B) and a lower clamp member (112A, 112B), and means for biasing the upper clamp member (111A, 111B) and the lower clamp member (112A, 112B) towards each other so as to exert pressure on the inner armour wires (1001).

7. The clamp device according to claim 6, wherein the means for biasing the upper clamp member (111A, 111B) and the lower clamp member (112A, 112B) towards each other comprise a plurality of threaded members (113), wherein, optionally:
the plurality of threaded members (113) comprise a plurality of threaded shafts extending upwards from the lower clamp member (112A, 112B), and
the upper clamp member (11A, 11B) comprises a plurality of through holes (115) for receiving the threaded members (113),
the clamp device further comprising internally threaded elements (114) adapted to be screwed onto the threaded members (113) above the upper clamp member (111A, 111B).

8. The clamp device according to any one of the preceding claims, wherein the lower clamp assembly (12) comprises an upper clamp member (121A, 121B) and a lower clamp member (122A, 122B), and means for biasing the upper clamp member (121A, 121B) and the lower clamp member (122A, 122B) towards each other so as to exert pressure on the outer armour wires (1002).

9. The clamp device according to any one of the preceding claims, further comprising a base member (14A, 14B), the base member (14A, 14B) being arranged for attachment of the clamp device (1) to an installation.

10. The clamp device according to claim 9, wherein the base member (14A, 14B) comprises a first part (14A) and a second part (14B), adapted be assembled facing each other forming, between them, a channel portion with a periphery delimited by the first part (14A) and the second part (14B), the channel portion forming part of a channel (15), extending through the clamp device, for accommodating the cable (1000).

11. The clamp device according to any one of claims 9 and 10, wherein the base member (14A, 14B) comprises an upper part (142; 122A, 122B) forming part of the lower clamp assembly (12).

12. The clamp device according to any one of claims 9 and 10, wherein the lower clamp assembly (12) is arranged so that it is capable of rotation in relation to the base member (14A, 14B), wherein the clamp device preferably comprises a slide element (16) arranged between the lower clamp assembly (12) and the base member (14A, 14B).

13. The clamp device according to claim 12 when depending from claim 8, wherein the means for biasing the upper clamp member (121A, 121B) of the lower clamp assembly (12) and the lower clamp member (122A, 122B) of the lower clamp assembly (12) towards each other comprise a plurality of threaded elements arranged to be threaded into respective threaded bores (131) in the upper clamp member (121A, 121B) of the lower clamp assembly (12) from below, traversing the lower clamp member (122A, 122B) of the lower clamp assembly (12), the threaded elements (130) each having a head portion (130A) arranged to exert pressure onto the lower clamp member (122A, 122B) of the lower clamp assembly (12), wherein the base preferably comprises an upper flange (142) comprising through holes (147), the through holes (147) having a diameter that is sufficient to allow the head portion (130A) of a respective threaded element (130) to pass through the through hole (147).

14. An installation (3000) comprising an offshore platform (3001) and equipment (3002) for energy production, the installation further comprising a clamp device (1) according to any one of the preceding claims, the clamp device (1) clamping a cable (1000) for transfer of energy produced by the equipment (3002) to a destination remote from the installation (3000).

15. A method of clamping a cable (1000) using a clamp device (1) as per any one of claims 1-13, the cable comprising inner armour wires (1001) and outer armour wires (1002), the method comprising the steps of:
clamping outer armour wires (1002) with the lower clamp assembly (12); and
clamping inner armour wires (1001) with the upper clamp assembly (11).
